# EUROPÄISCHE PATENTSCHRIFT

(11) **EP 1 221 346 B1**
(45) Veröffentlichungstag und Bekanntmachung des Hinweises auf die Patenterteilung: **16.03.2005**
(21) Anmeldenummer: 01127221.8
(22) Anmeldetag: 16.11.2001
(51) Int. Cl.: B05C 3/10, B65G 49/04, B65G 49/02

(54) **Anlage zur Behandlung, insbesondere zum Lackieren, von Gegenständen, insbesondere von Fahrzeugkarosserien**
Treatment device especially for painting objects, especially automobile bodies
Dispositif de traitement, notamment pour la peinture d'objets, notamment de carrosseries de véhicules

(30) Priorität: 07.01.2001 DE 10100447
(43) Veröffentlichungstag der Anmeldung: 10.07.2002
(73) Patentinhaber: EISENMANN Maschinenbau GmbH & Co. KG, 71032 Böblingen (DE)
(72) Erfinder: Ehrenleitner, Franz, 70439 Stuttgart (DE); Weinand, Hans-Joachim, 71254 Ditzingen (DE)
(74) Vertreter: Ostertag, Ulrich, Dr.

(56) Entgegenhaltungen:
- DE-A- 19 641 048

## Beschreibung

Die Erfindung betrifft eine Anlage zur Behandlung, insbesondere zum Lackieren, von Gegenständen, insbesondere von Fahrzeugkarosserien, mit
a) mindestens einem Bad, in dem sich eine Behandlungsflüssigkeit, insbesondere ein Lack, befindet, in welche die Gegenstände eingetaucht werden sollen;
b) einer Fördereinrichtung, mit welcher die Gegenstände in einer kontinuierlichen oder intermittierenden Translationsbewegung durch die Anlage geführt werden können;
c) einer Vielzahl von Eintaucheinrichtungen, die mit der Fördereinrichtung verbunden sind, jeweils einen Gegenstand tragen und in der Lage sind, den Gegenstand durch Drehung um eine Drehachse in das Bad einzutauchen.

Eine Anlage dieser Art ist in der DE 196 41 048 C2 beschrieben; die zu behandelnden Gegenstände sind hier zu lackierende Fahrzeugkarosserien. Diese werden durch eine Drehung um einen Winkel von etwa 180° in das Lackbad eingetaucht; die Drehachse liegt dabei, in Bewegungsrichtung der Fahrzeugkarosserien gesehen, etwa in deren Mitte. Die Translationsbewegung der Fahrzeugkarosserien ist mit der Drehbewegung zwangsgekoppelt. Die Kräfte, mit denen die Drehbewegung bewirkt wird, werden dabei durch eine Art Nocken/Kulisseneinrichtung aus der Translationsbewegung abgeleitet, so daß der momentane Drehwinkel der Fahrzeugkarosserien sich immer eindeutig aus der Position der Fahrzeugkarosserie in Translationsrichtung ergibt.

Nachteilig bei dieser bekannten Anlage ist der verhältnismäßig große Drehwinkel, zu dessen Bewältigung ein Mindestmaß an Zeit erforderlich ist. Es hat sich jedoch herausgestellt, daß sowohl beim Lackieren als auch bei anderen Arten der Oberflächenbehandlung alle Oberflächenbereiche der zu behandelnden Gegenstände möglichst gleichzeitig oder jedenfalls in kurz aufeinander folgenden Zeitabständen in die Behandlungsflüssigkeit eingetaucht werden sollten, um gute und gleichmäßige Behandlungsergebnisse zu erhalten. Speziell bei Fahrzeugkarosserien, die mit ihrer Längsrichtung, also der Richtung ihrer größten Abmessung, parallel zur Transportrichtung ausgerichtet sind, hat die bekannte Anlage einen weiteren Nachteil: Die Dimension, welche die eingetauchte Karosserie in Transportrichtung einnimmt, entspricht mindestens einer Karosserielänge; innerhalb des Bades können Fahrzeugkarosserien nur in einem entsprechenden Abstand aufeinander folgen.

Aufgabe der vorliegenden Erfindung ist es, eine Anlage der eingangs genannten Art so auszugestalten, daß insbesondere der Eintauchvorgang rasch abgewickelt werden kann und bei Gegenständen, die in einer Richtung eine besonders lange Abmessung aufweisen, die von diesen Gegenständen im Bad eingenommene Abmessung in Transportrichtung verkleinert ist.

Diese Aufgabe wird erfindungsgemäß dadurch gelöst, daß
d) die Drehachse jeder Eintaucheinrichtung in der Projektion auf eine horizontale Ebene außerhalb der projizierten Kontur der Gegenstände liegt
   und
e) der Drehwinkel beim Eintauchvorgang etwa 90° beträgt.

Die Erfindung fußt auf der Erkenntnis, daß der Winkel, um den ein Gegenstand bis zum vollständigen Eintauchen in das Bad verschwenkt werden muß, von der Relativposition der Drehachse zu diesem Gegenstand abhängt. Befindet sich die Drehachse, wie beim Stande der Technik, in Transportrichtung der Gegenstände etwa mittig, so müssen diese um den bereits erwähnten verhältnismäßig großen Winkel von 180° gedreht werden, um ein vollständiges Eintauchen zu bewirken. Verlagert man dagegen die Position der Drehachse so, daß sich diese seitlich, vor oder hinter der Karosserie befindet, genügt eine Verschwenkung der Gegenstände um 90°, um diese vollständig eintauchen zu können. Eine Verdrehung um 90° läßt sich verständlicherweise sehr viel schneller erzielen als die doppelt so große Verdrehung von 180°, die beim Stande der Technik notwendig ist. Der schnellere Eintauchvorgang verbessert die Qualität und Gleichmäßigkeit der Oberflächenbehandlung. Bei Gegenständen, wie z.B. Fahrzeugkarosserien, die in ihrer normalen Transportposition in Transportrichtung die längste Abmessung aufweisen, wird nach der Verschwenkung um 90° eine andere Dimension, bei Karosserien z.B. die Höhe, die relevante Dimension, die für die Länge des Bades verantwortlich ist. Zwar muß das Bad in diesem Falle tiefer als beim Stande der Technik sein; unter Berücksichtigung der Kinematik der Eintauch- und Austauchbewegung läßt sich jedoch zeigen, daß bei der erfindungsgemäßen Anordnung kleinere Badvolumina erzielbar sind als dies beim Stande der Technik der Fall war.

Der Drehwinkel beim Austauchvorgang kann ebenfalls 90° betragen und der Eintauchvorgang und der Austauchvorgang können in entgegengesetzten Drehrichtungen erfolgen. Dies bedeutet, daß beim Austauchen des Gegenstandes die Eintauch-Schwenkbewegung um 90° wieder rückgängig gemacht wird.

Eintauchvorgang und Austauchvorgang benötigen in Eintauchund Austauchrichtung am wenigsten Platz, wenn die Drehbewegung der Gegenstände dabei einer Linearbewegung in Richtung quer zur Drehachse überlagert wird. Auf diese Weise lassen sich die Gegenstände nämlich sehr raumsparend in einen schmalen Badbereich "einfädeln" bzw. aus diesem Badbereich wieder "ausfädeln".

Die Drehachse jeder Eintauchvorrichtung kann quer zur Transportrichtung verlaufen. Unter "quer" wird jede Richtung verstanden, bei welcher die Drehachse die Badbreite überspannt. In Frage kommt insbesondere ein Winkel von 90°, jedoch auch jeder andere schräge, in den Praktikabilitätsgrenzen liegende Winkel.

Nach einem Einschwenken der Gegenstände in das Bad durch die erwähnte 90°-Verdrehung kann das Austauchen aus dem Bad auch durch eine in derselben Drehrichtung erfolgende weitere Verdrehung der Gegenstände um 90° erfolgen. Nach Abschluß dieser Austauchbewegung liegt dann der Gegenstand gegenüber der ursprünglichen Orientierung "auf dem Kopf".

Der Gegenstand kann in dieser Orientierung entweder weiter befördert oder durch eine weitere Drehung um 180° wieder in die ursprüngliche Orientierung gebracht werden.

Die Drehachse jeder Eintaucheinrichtung kann auch parallel zur Transportrichtung verlaufen. Sie liegt dann bei der Passage der Bäder seitlich von diesen, so daß von ihr keine Verschmutzungen in die Bäder gelangen können. Verläuft die Drehachse parallel zur Transportrichtung, kann mit dem Eindrehen des Gegenstandes in das Bad zwar erst dann begonnen werden, wenn das nachlaufende Ende des Gegenstandes die vordere Stirnwand des Bades passiert hat. Da die Eintauchbewegung jedoch, wie erwähnt, sehr rasch erfolgen kann, ist dies kein gravierender Nachteil.

Ein Ausführungsbeispiel der Erfindung wird nachfolgend anhand der Zeichnung näher erläutert; es zeigen
- Figur 1:: einen perspektivischen Ausschnitt aus einer Tauchlackieranlage für Fahrzeugkarosserien;
- Figur 2:: einen Schnitt durch die Anlage von Figur 1 senkrecht zur Bewegungsrichtung der Fahrzeugkarosserien, gesehen von rechts unten;
- Figur 3:: eine Seitenansicht des Ausschnittes der Lackieranlage von Figur 1;
- Figur 4:: eine Seitenansicht eines Transportwagens, der in der Lackieranlage verwendet wird, mit einer hieran befestigten Fahrzeugkarosserie;
- Figur 5:: eine perspektivische Ansicht des Transportwagens samt Fahrzeugkarosserie von Figur 4;
- Figur 6:: eine vergrößerte Detailansicht im Bereich des mit dem Buchstaben A gekennzeichneten Kreises von Figur 2;
- Figur 7:: eine vergrößerte Detailansicht im Bereich des mit dem Buchstaben B gekennzeichneten Kreises von Figur 2.

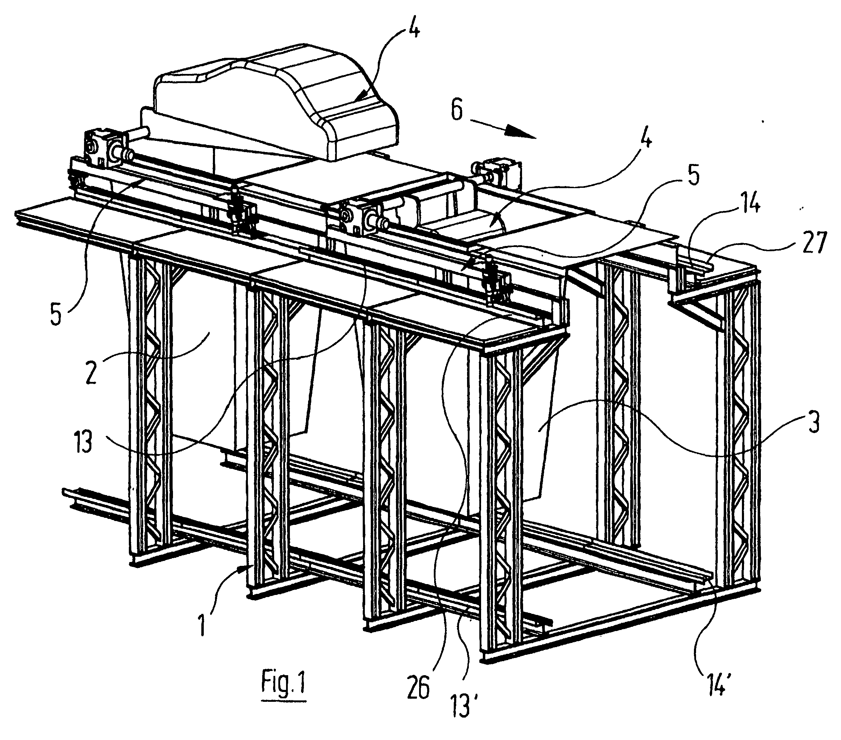

Die in der Zeichnung dargestellte Tauchlackieranlage für Fahrzeugkarosserien umfaßt eine eine Vielzahl von senkrechten Ständern und horizontalen Trägern aufweisende Stahlkonstruktion 1, in der zwei Badbehälter 2, 3 aufgehängt sind. Die Badbehälter 2, 3 sind bis zu einem bestimmten Spiegel mit flüssigem Lack angefüllt, in welche Fahrzeugkarossieren 4 eingetaucht werden sollen. Diese Fahrzeugkarosserien 4 werden hierzu mit Hilfe von einzelnen Transportwagen 5 in Richtung des Pfeiles 6 (vgl. Figur 1) transportiert, wobei diese Translationsbewegung der einzelnen Transportwagen 5 unabhängig voneinander erfolgen kann und im Zuge dieser unabhängigen Bewegungen Verlangsamungen, Beschleunigungen, Stopps und auch Bewegungsumkehrungen möglich sind. Insgesamt erfolgt jedoch ein Transport der Fahrzeugkarosserien 4 in Richtung des Pfeiles 6 von Figur 1.

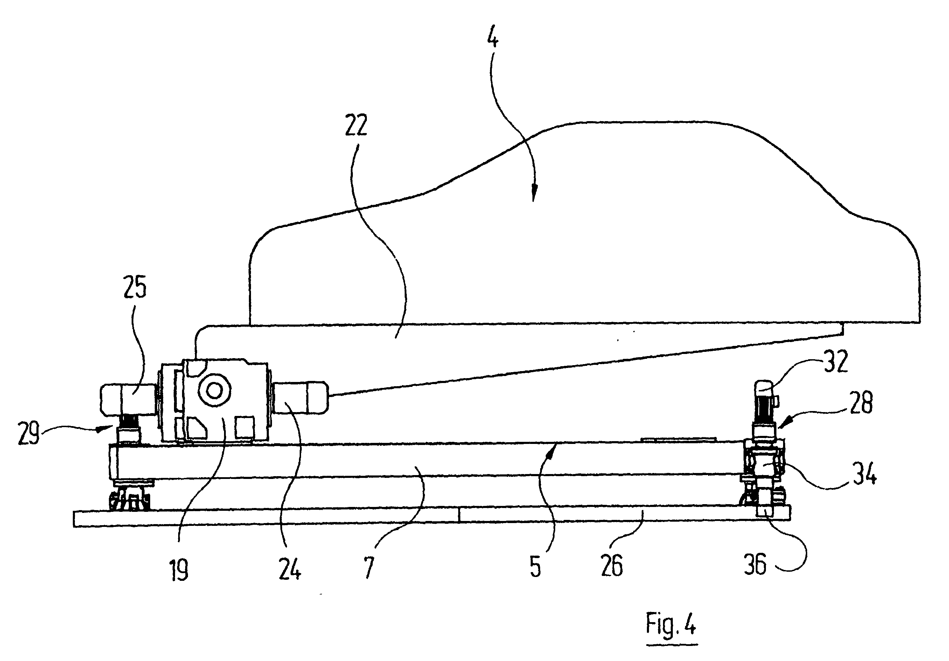

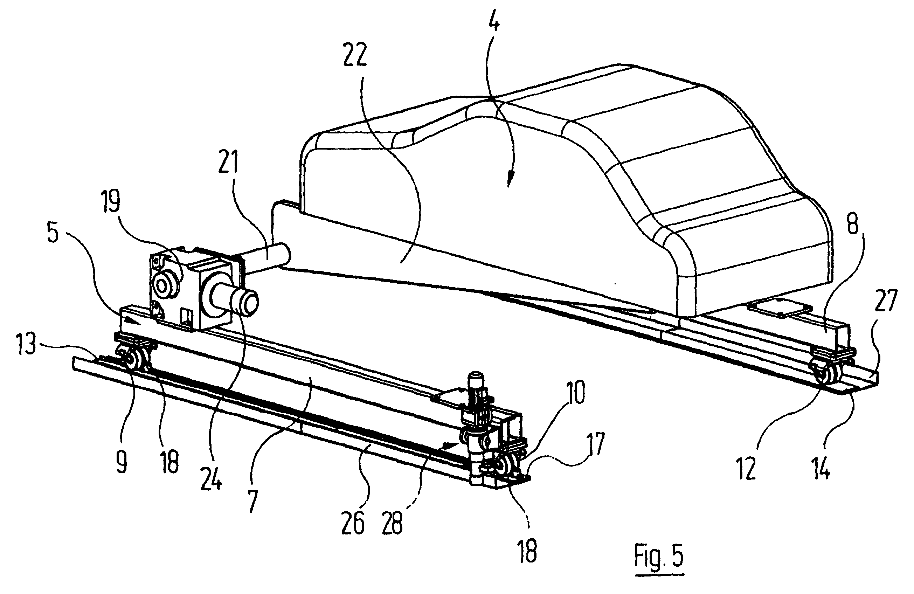

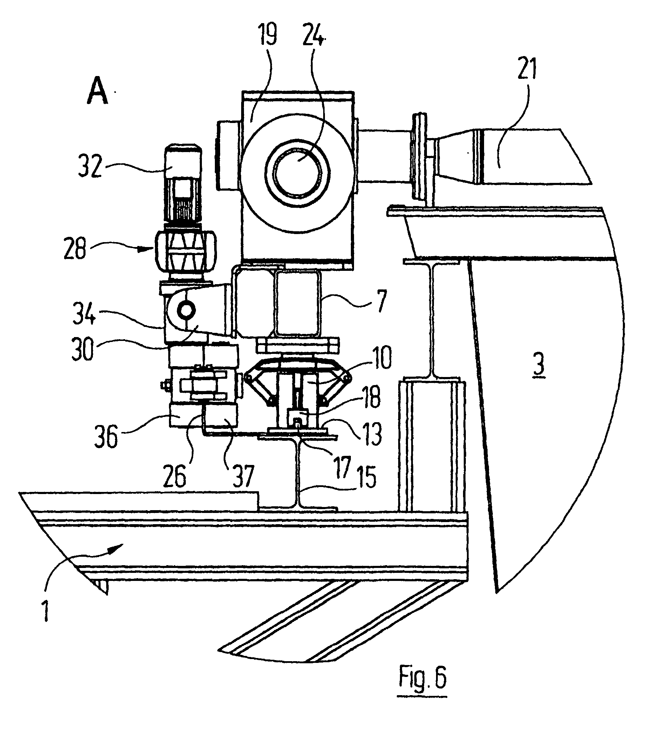

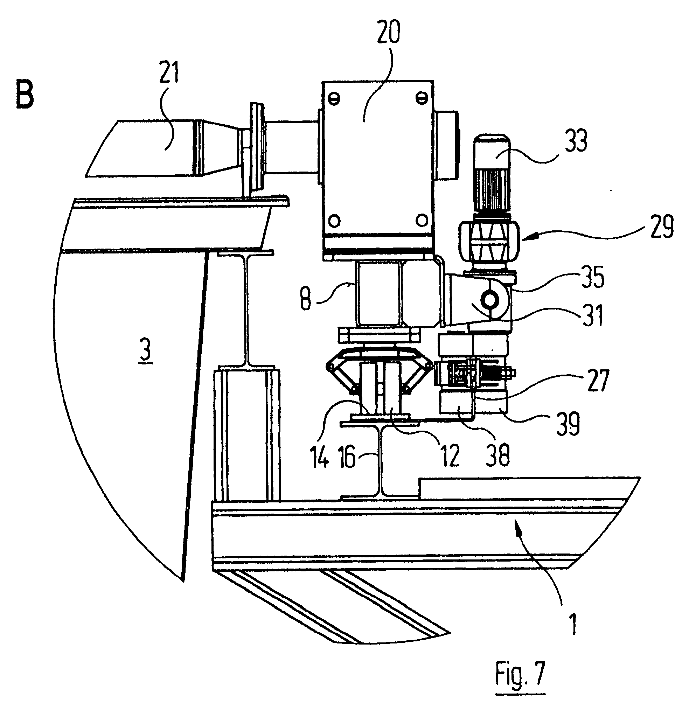

Die genaue Bauweise der Transportwägen 5 ist in den Figuren 4 bis 7 näher dargestellt. Wie insbesondere die Figur 5 zeigt, besitzt jeder Transportwagen 5 zwei Längstraversen 7, 8, an deren Unterseite jeweils zwei Doppelräder 9, 10 bzw. 11, 12 um horizontale Achse drehbar gelagert sind. Zusätzlich sind die Räder 9 bis 12 jeweils mit Hilfe eines in Einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

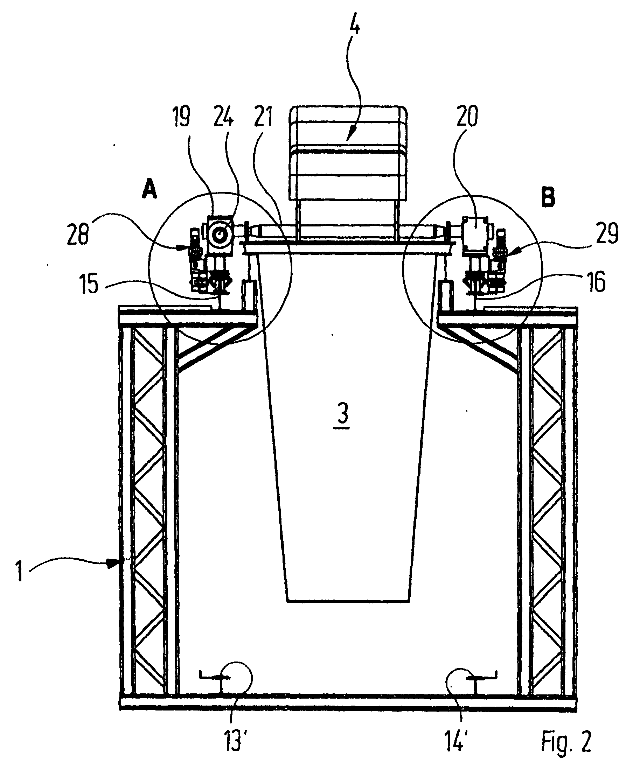

Die Doppelräder 9, 10 rollen auf einer ersten Lauffläche 13 und die Doppelräder 11, 12 auf einer hierzu parallen zweiten Lauffläche 14 ab. Die Laufflächen 13, 14 sind ihrerseits auf jeweils einem I-Profilträger 15, 16 montiert, der von dem Stahlbau 1 getragen wird (vgl. insbesondere Figur 2).

In der Mitte der in Figur 5 unteren, ersten Lauffläche 13 ist eine Führungsrippe 17 angebracht, die von eine komplementäre Ausnehmung aufweisenden Führungsgliedern 18 übergriffen wird. Jeweils ein Führungsglied 18 ist mit dem Drehschemel eines zugeordneten Doppelrads 9 bzw. 10 so verbunden, daß es dieses Doppelrad 9 bzw. 10 entsprechend dem Verlauf der Führungsrippe 17 um die vertikale Achse verdreht. Auf diese Weise folgen die Doppelräder 9, 10 der ersten Lauffläche 13. Die der zweiten, in Figur 5 oberen Lauffläche 14 zugeordneten Doppelräder 11, 12 dagegen sind als reine Nachlaufräder konzipiert; das heißt, es sind keine gesonderten Führungsmittel zur Beeinflussung der Winkellage der Räder um deren vertikale Drehachse vorgesehen. Auf diese Weise können Genauigkeitsanforderungen an die Führungsmittel, mit denen die Transportwagen 5 auf den Laufflächen 13, 14 gehalten werden, gering gehalten werden.

Im in Bewegungsrichtung hinteren Endbereich der beiden Längstraversen 7, 8 der Transportwagen 5 ist jeweils ein Getriebeblock 19 bzw. 20 montiert, deren Abtriebswellen durch eine Drehwelle 21 verbunden sind. Auf der Drehwelle 21 sind in Abstand zueinander zwei sich nach vorne erstrekkende Ausleger 22 befestigt, die in der Seitenansicht die Form schmaler rechtwinkliger Dreiecke haben. Auf den normalerweise nach oben zeigenden und horizontal verlaufenden Katheten dieser Dreiecke sind die Fahrzeugkarosserien 4 in geeigneter, nicht dargestellter Weise befestigt. Projiziert man die Drehwelle 21 und die Fahrzeugkarosserie 4 in eine horizontale Ebene, so liegt in dieser die Drehwelle 21 hinter dem projizierten Umriß der Fahrzeugkarosserie 4.

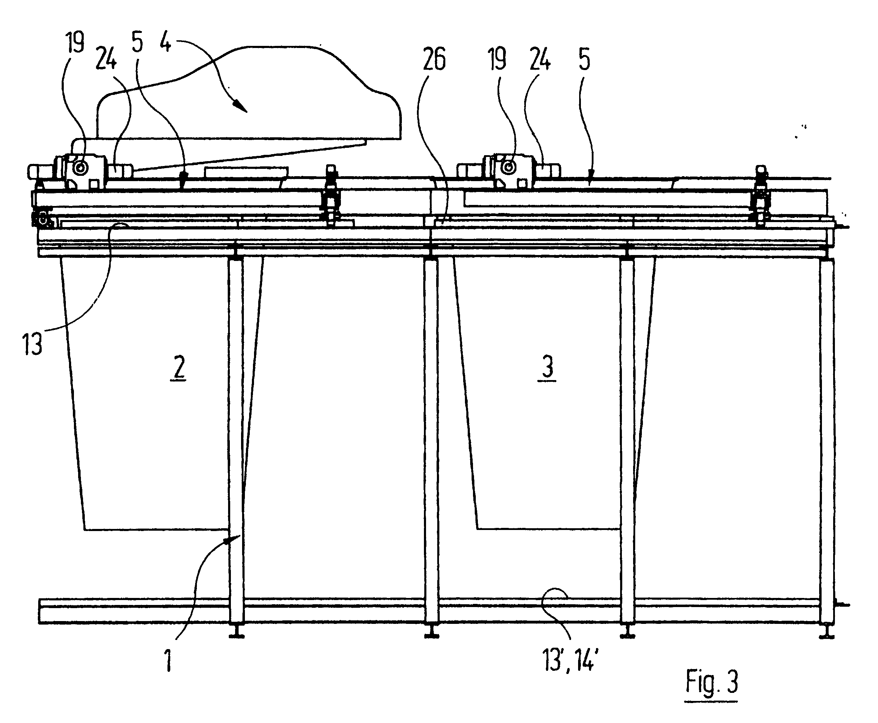

An die Getriebeblocks 19, 20 ist jeweils ein Elektromotor 24 bzw. 25 angeflanscht. Die Anordnung ist so, daß bei Bestromung der Elektromotoren 24, 25 die Drehwelle 21 aus der Position der Figuren 3 bis 5 im Uhrzeigersinn verdreht wird, wobei in sie Kräfte von beiden Seiten her eingeleitet werden. Der konstruktiv vorgesehene Drehwinkel beträgt etwa 90°. Die Verdrehung der Drehwelle 21 ist von einer entsprechenden Verdrehung der Karosserie 4 um die Achse der Drehwelle 21 begleitet, sodaß diese am Ende der Drehbewegung im wesentlichen senkrecht steht. Diese Verdrehung kann durch eine entsprechende gegensinnige Verdrehung um 90° wieder rückgängig gemacht werden.

Die Doppelräder 9 bis 12 der Transportwagen 5 sind selbst nicht angetrieben. Der Vorwärtstrieb der Transportwagen 5 erfolgt vielmehr über einen gesonderten Antrieb, der nachfolgend anhand der Figuren 5 bis 7 näher erläutert wird.

Parallel zu den beiden Laufflächen 13, 14 erstrecken sich zwei senkrecht ausgerichtete, stationäre Antriebsflansche 26, 27. Diese wirken jeweils mit einem Preßrollenantrieb 28 bzw. 29 zusammen, der an der Seitenfläche der benachbarten Längstraverse 7, 8 mittels einer Lasche 30 bzw. 31 befestigt ist. Die Preßrollenantriebe 28, 29 umfassen jeweils einen elektrischen Antriebsmotor 32, 33 und ein Antriebsgetriebe 34, 35. Letzteres treibt die parallelen, vertikalen Achsen zweier Preßrollen 36, 37 bzw. 38, 39 an, die von beiden Seiten her gegen den jeweils zugeordneten Antriebsflansch 26 bzw. 27 angepreßt werden. Werden die Antriebsmotoren 32, 33 bestromt, laufen die Preßrollen 36, 37 bzw. 38, 39 auf den jeweiligen Seitenflächen der Antriebsflansche 26, 27 ab und bewegen dabei den Transportwagen 5 auf den Laufflächen 13, 14 vorwärts.

Jeder Transportwagen 5 umfaßt seine eigene Wagensteuerung, unter deren Regime er sowohl seine Translationsbewegung entlang der Laufflächen 13, 14 als auch die Drehbewegung der Fahzeugkarosserien 4 um die Achse der Drehwelle 21 ausführt.

Die Funktion der oben beschriebenen Tauchlackieranlage insgesamt ist wie folgt:

Die zu lackierenden Fahrzeugkarosserien werden jeweils auf einem eigenen Transportwagen 5 den Bädern 2, 3 nacheinander zugeführt. Hat das vorauseilende Ende einer Fahrzeugkarosserie 4 den Beginn des in Transportrichtung 6 ersten Bades 2 erreicht, entscheidet die Wagensteuerung, ob diese Fahrzeugkarosserie 4 in dieses Bad 2 eingetaucht werden soll. Wird dies bejaht, werden die Elektromotoren 24, 25 bestromt. In Abstimmung mit der Geschwindigkeit der Translationsbewegung, die durch die Preßrollenantriebe 28, 29 vorgegeben wird, wird die Fahrzeugkarosserie 4 um die Achse der Drehwelle 21 um 90° verdreht und in den im Bad 2 enthaltenen Lack eingetaucht.

Die Fahrzeugkarosserie 4 nimmt nunmehr in Transportrichtung nur noch eine Abmessung ein, die ihrer Höhe entspricht. Da diese im allgemeinen erheblich kleiner als die Länge der Fahrzeugkarosserie 4 ist, ist der Platzbedarf in Transportrichtung jetzt entsprechend kleiner. Dies bedeutet, daß die Fahrzeugkarosserien 4 innerhalb des Bades 2 dichter aufeinander folgen können, als dies beim Stande der Technik der Fall war. Da die Schwenkbewegung nur einen Winkel von 90° durchmißt, kann sie schneller abgewickelt werden als beim Stand der Technik, wo ein Schwenkwinkel von 180° zu bewältigen war.

Je nach Wunsch kann die Translationsbewegung des Transportwagens 5 bei eingetauchter Fahrzeugkarosserie 4 verlangsamt oder angehalten und die Fahrzeugkarosserie 4 einer Schaukelbewegung unterzogen werden, indem die Elektromotoren 24, 25 abwechselnd gegensinnig bestromt werden.

Nach der gewünschten Verweilzeit im Bad 2 wird die Fahrzeugkarosserie 4 durch Betätigung der Elektromotoren 24, 25 und Verdrehung um die Achse der Drehwelle 21 wieder aus dem Bad 2 herausgehoben. Dies kann auf zweierlei Art geschehen:

Bei der oben schon angedeuteten Art der Austauchbewegung wird die Verdrehung der Fahrzeugkarosserie 4 durch gegensinnige Bestromung der Elektromotoren 24, 25 und damit gegensinnige Verdrehung der Drehwelle 21 um 90° rückgängig gemacht. Der Austauchvorgang muß dabei so rechtzeitig vor dem Erreichen der hinteren Stirnwand des Bades 2 eingeleitet werden, daß die Fahrzeugkarosserie 4 wieder waagerecht steht, wenn ihr vorauslaufendes Ende an dem hinteren Badende angekommen ist.

Alternativ ist es auch möglich, die Fahrzeugkarosserie 4 unter Fortsetzung der Drehbewegung im gleichen Drehsinn aus dem Bad 2 herauszuheben. Dann muß Sorge dafür getragen werden, daß die nächstfolgende Fahrzeugkarosserie 4 im Bad 2 von dem nachlaufenden Ende der gerade verdrehten Fahrzeugkarosserie 4 einen ausreichenden Abstand aufweist. Nach einer Verdrehung um 90° befindet sich die Fahrzeugkarosserie 4 in einer Position, in der sie gegenüber dem Ausgangszustand "auf dem Kopf" steht. Sie kann nunmehr in dieser Position weiterbefördert werden, insbesondere dann wenn sie noch ein weiteres Bad zu durchlaufen hat, in der sie insgesamt nocheinmal um 180° gegensinnig verdreht wird. Die Fahrzeugkarosserie 4 kann aber auch durch eine weitere Verdrehung der Drehwelle 21 um 180° wieder in ihre ursprüngliche Position auf dem Transportwagen 5 zurückgebracht werden.

Bei Bedarf kann die Fahrzeugkarosserie 4 oberhalb des Bades 2 durch entsprechende Bestromung der Elektromotoren 24, 25 in unterschiedliche Winkelpositionen gebracht werden, um ein möglichst vollständiges Auslaufen und Abtropfen des Lacks in das zugeordnete Bad 2 zu ermöglichen und auf diese Weise die Verschleppung von Lack zu minimieren. Sodann wird durch Betätigung der Preßrollenantriebe 28, 29 die Translationsbewegung des Transportwagens 5 wieder aufgenommen, ggfs. mit höherer Geschwindigkeit, bis die Fahrzeugkarosserie 4 das in Bewegungsrichtung zweite Bad 3 erreicht hat. Dort können dieselben Vorgänge erneut ablaufen, wie dies für das erste Bad 2 beschrieben wurde.

In bestimmten Lackieranlagen folgen unterschiedliche Fahrzeugkarosserien 4 aufeinander, die in unterschiedlicher Weise behandelt werden müssen. Dies ist mit der beschriebenen Lackieranlage ohne weiteres möglich. Beispielsweise kann ein Bad 2, 3 vollständig überfahren werden; die Fahrzeugkarosserie 4 kann auch mit einer rückwärts gerichteten, kombinierten Dreh- und Translationsbewegung in das fragliche Bad 2, 3 eingetaucht werden.

Da, wie erwähnt, aufeinanderfolgende Fahrzeugkarosserien 4 in unterschiedlicher Weise in den Bädern 2, 3 behandelt werden können, können sich unterschiedliche Abstände zwischen aufeinanderfolgenden Transportwagen 5 einstellen. Diese unterschiedlichen Abstände können auf Wunsch durch entsprechende Beschleunigung bzw. Verzögerung aufeinanderfolgender Transportwagen 5 wieder vergleichmäßigt werden.

Am Anfang der Lackieranlage befindet sich eine nicht dargestellte Aufgabestation, an welcher die einzelnen Fahrzeugkarosserien 4 auf einen stehenden Transportwagen 5 aufgesetzt und an diesem befestigt werden. In entsprechender Weise befindet sich am Ende der Lackieranlage eine Abnahmestatiön, an welcher die Fahrzeugkarosserien 4 von einem stehenden Transportwagen 5 abgenommen werden. Sowohl die Aufgabe- als auch die Abnahmestation sind als Hubstationen ausgebildet. In der Abnahmestation wird der entleerte Transportwagen 5 nach unten abgesenkt, bis die Laufflächen 13, 14, die sich auch in die Abnahmestation hinein fortsetzen, mit parallelen Laufflächen 13', 14' fluchten, die sich in einem Untergeschoß des Stahlbaues 1 zurück bis zur Aufgabestation erstrecken. Die leeren Transportwagen 5 werden auf diesen Laufflächen 13', 14' unterhalb der Bäder 2, 3 entgegen der Richtung des Pfeils 6 zur Aufgabestation gebracht, was mit einer höheren Geschwindigkeit geschehen kann. In der Aufgabestation werden die Transportwagen 5 wieder auf das Niveau der oberen Laufflächen 13, 14 gebracht und, wie schon beschrieben, mit neuen zu lackierenden Fahrzeugkarosserien 4 bestückt.

Selbstverständlich können die Transportwagen 5 auch auf andere Art zum Einlaß der Anlage zurückgebracht werden.

Wie insbesondere der Figur 1 zu entnehmen ist, befinden sich sämtliche Fördertechnikkomponenten der beschriebenen Lackieranlage seitlich von den Bädern 2, 3, so daß die in den Bädern 2, 3 befindlichen Flüssigkeiten von diesen Fördertechnikkomponenten nicht verschmutzt werden können.

Beim oben beschriebenen Ausführungsbeispiel verläuft die Drehwelle 21 senkrecht zur Transportrichtung 6. Bei. einem in der Zeichnung nicht dargestellten Ausführungsbeispiel dagegen ist die Drehwelle 21 so angeordnet, daß sie sich parallel zur Transportrichtung 6 erstreckt. Dies läßt sich konstruktiv dadurch erreichen, daß beide Getriebeblocks 19, 20 mit den zugeordneten Elektromotoren 24, 25 auf derselben Längstraverse 7 oder 8 im Bereich unterschiedlicher Enden angebracht werden. Die Ausleger 22 erstrecken sich dann senkrecht zur Transportrichtung 6. Beim Verdrehen der Drehwelle 21 werden die Fahrzeugkarosserien 4 von der Seite her in das Bad 2 bzw. 3 eingedreht. Dies kann naturgemäß erst dann erfolgen, wenn die Fahrzeugkarosserien 4 vollständig über dem Bad 2 bzw. 3 stehen. Um keine Badlänge zu verschenken, kann der Transportwagen 5 kurz angehalten werden, bis die Eintauchbewegung der Fahrzeugkarosserie 4 abgeschlossen ist. Da diese Eintauchbewegung aber wegen des verhältnismäßig kleinen Schwenkwinkels sehr rasch durchgeführt werden kann, ist es in vielen Fällen auch möglich, den Transportwagen 5 mit kontinuierlicher Geschwindigkeit weiterfahren zu lassen, ohne zu viel an Badlänge zu verschenken.

Ist die Position der Drehwelle 21 auf dem Transportwagen 5 fest, so muß bei einer Ausgestaltung der Eintaucheinrichtung mit zur Transportrichtung 6 paralleler Drehwelle 21 eine Badbreite vorgesehen werden, welche der größten Ausladung der Fahrzeugkarosserie 4 in dieser Richtung währen des Schwenkvorgangs entspricht. Diese Badbreite läßt sich jedoch erheblich reduzieren und dabei das Badvolumen deutlich verringern, wenn der Eintauch-Drehbewegung der Fahrzeugkarosserien 4 eine Linearbewegung der Drehwelle 21 senkrecht zur Transportrichtung der Fahrzeugkarosserien 4 überlagert wird. In diesem Falle lassen sich die Fahrzeugkarosserien 4 in ein Bad von der Seite her "einfädeln", dessen Breite nicht viel größer als die Höhe der Fahrzeugkarosserien 4 ist. Die Austauchbewegung muß dann von einer entsprechenden, gegensinnigen Linearbewegung der Drehwelle 21 und der von dieser getragenen Fahrzeugkarosserie 4 begleitet werden. Konstruktiv läßt sich diese überlagerte Linearbewegung dadurch erreichen, daß die beiden Getriebeblocks 19, 20 nicht direkt auf einer der beiden Längstraversen 7, 8 sondern auf einem Verschiebetisch angebracht werden, der seinerseits gegenüber der entsprechenden Längstraverse 7, 8 quer zur Transportrichtung verschiebbar ist.

## Patentansprüche

1. Anlage zur Behandlung, insbesondere zum Lackieren, von Gegenständen, insbesondere von Fahrzeugkarosserien, mit
a) mindestens einem Bad, in dem sich eine Behandlungsflüssigkeit, insbesondere ein Lack, befindet, in welche die Gegenstände eingetaucht werden sollen;
b) einer Fördereinrichtung, mit welcher die Gegenstände in einer kontinuierlichen oder intermittierenden Translationsbewegung durch die Anlage geführt werden können;
c) einer Vielzahl von Eintaucheinrichtungen, die mit der Fördereinrichtung verbunden sind, jeweils einen Gegenstand tragen und in der Lage sind, den Gegenstand durch eine Drehung um eine Drehachse in das Bad einzutauchen,
**dadurch gekennzeichnet, daß**
d) die Drehachse jeder Eintaucheinrichtung (19 bis 25) in der Projektion auf eine horizontale Ebene außerhalb der projizierten Kontur des Gegenstandes (4) liegt
und
e) der Drehwinkel beim Eintauchvorgang etwa 90° beträgt.

2. Anlage nach Anspruch 1, **dadurch gekennzeichnet, daß** der Drehwinkel beim Austauchvorgang ebenfalls etwa 90° beträgt und der Eintauchvorgang und der Austauchvorgang in entgegengesetzten Drehrichtungen erfolgen.

3. Anlage nach Anspruch 2, **dadurch gekennzeichnet, daß** der Drehbewegung der Gegenstände (4) beim Eintauchvorgang eine Linearbewegung in einer Richtung senkrecht zur Drehachse und der Drehbewegung der Gegenstände (4) beim Austauchvorgang eine Linearbewegung in entgegengesetzter Richtung überlagert ist.

4. Anlage nach einer der Ansprüche 1 bis 3, **dadurch gekennzeichnet, daß** die Drehachse jeder Eintaucheinrichtung (19 bis 25) quer zur Transportrichtung verläuft.

5. Anlage nach Anspruch 4 bei Rückbeziehung auf Anspruch 1, **dadurch gekennzeichnet, daß** der Drehwinkel beim Austauchen ebenfalls 90° beträgt und der Eintauchvorgang und der Austauchvorgang in derselben Drehrichtung erfolgen.

6. Anlage nach Anspruch 5, **dadurch gekennzeichnet, daß** im Anschluß an den Austauchvorgang einer weitere Drehung des Gegenstandes (4) um 180° erfolgt.

7. Anlage nach einem der Ansprüche 1 bis 3, **dadurch gekennzeichnet, daß** die Drehachse jeder Eintaucheinrichtung (19 bis 25) parallel zur Transportrichtung verläuft.

## Claims

1. An installation for treating, in particular coating, articles, in particular vehicle bodies, having
a) at least one bath, in which there is located a treatment liquid, in particular a coating, into which the articles are to be dipped;
b) a conveying means, with which the articles may be conveyed through the installation in a continuous or intermittent translational movement;
c) a plurality of dipping means, which are connected to the conveying means, each carry one article and are capable of dipping the article into the bath by rotation about a rotational axis,
**characterised in that**
d) in a projection onto a horizontal plane, the rotational axis of each dipping means (19 to 25) is located outside the projected contour of the article (4)
and
e) the angle of rotation during the dipping process amounts to approximately 90°.

2. An installation according to claim 1, **characterised in that** the angle of rotation during the lifting-out process likewise amounts to approximately 90° and the dipping process and lifting-out process take place in opposite directions of rotation.

3. An installation according to claim 2, **characterised in that** a linear movement in a direction perpendicular to the rotational axis is superimposed on the rotational movement of the articles (4) during the dipping process and a linear movement in the opposite direction is superimposed on the rotational movement of the articles (4) during the lifting-out process.

4. An installation according to one of claims 1 to 3, **characterised in that** the rotational axis of each dipping means (19 to 25) extends perpendicularly to the conveying direction.

5. An installation according to claim 4 with reference to claim 1, **characterised in that** the angle of rotation during lifting-out likewise amounts to 90° and the dipping process and the lifting-out process take place in the same direction of rotation.

6. An installation according to claim 5, **characterised in that** the lifting-out process is followed by a further rotation of the article (4) by 180°.

7. An installation according to one of claims 1 to 3, **characterised in that** the rotational axis of each dipping means (19 to 25) extends parallel to the conveying direction.

## Revendications

1. Installation de traitement d'objets, notamment de peinture de carrosseries de véhicules, avec
a) au moins un bain dans lequel se trouve un liquide de traitement, notamment une peinture, dans lequel les objets doivent être immergés ;
b) un dispositif de convoyage, avec lequel les objets peuvent être dirigés à travers l'installation en un mouvement de translation continu ou intermittent ;
c) une pluralité de dispositifs d'immersion, qui sont reliés au dispositif de convoyage, portent chacun un objet et sont à même d'immerger cet objet dans le bain par une rotation autour d'un axe de rotation,
**caractérisée en ce que**
d) l'axe de rotation de chaque dispositif d'immersion (19 à 25) se situe, dans la projection sur un plan horizontal, à l'extérieur du contour projeté de l'objet (4), et
e) l'angle de rotation lors du processus d'immersion est d'environ 90°.

2. Installation selon la revendication 1, **caractérisée en ce que** l'angle de rotation lors du processus d'émersion est également d'environ 90°, et le processus d'immersion et le processus d'émersion s'effectuent dans des directions de rotation opposées.

3. Installation selon la revendication 2, **caractérisée en ce qu'**un mouvement linéaire dans une direction perpendiculaire à l'axe de rotation se superpose au mouvement de rotation des objets (4) lors du processus d'immersion, et un mouvement linéaire en direction opposée se superpose au mouvement de rotation des objets (4) lors du processus d'émersion.

4. Installation selon l'une des revendications 1 à 3, **caractérisée en ce que** l'axe de rotation de chaque dispositif d'immersion (19 à 25) s'étend transversalement à la direction de transport.

5. Installation selon la revendication 4 en rattachement à la revendication 1, **caractérisée en ce que** l'angle de rotation lors de l'émersion est également de 90°, et le processus d'immersion et le processus d'émersion s'effectuent dans la même direction de rotation.

6. Installation selon la revendication 5, **caractérisée en ce que** le processus d'émersion est suivi d'une rotation supplémentaire de l'objet (4) de 180°.

7. Installation selon l'une des revendications 1 à 3, **caractérisée en ce que** l'axe de rotation de chaque dispositif d'immersion (19 à 25) s'étend parallèlement à la direction de transport.
